(19) Europäisches Patentamt
European Patent Office
Office européen des brevets

(11) **EP 2 738 536 B1**

(12) **EUROPEAN PATENT SPECIFICATION**

(45) Date of publication and mention
of the grant of the patent:
**02.05.2018 Bulletin 2018/18**

(51) Int Cl.:
***G01M 5/00*** *(2006.01)*

(21) Application number: **13154563.4**

(22) Date of filing: **08.02.2013**

(54) **System for structural monitoring**

System zur strukturellen Überwachung

Système de surveillance de structure

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.07.2012 IT BO20120410**

(43) Date of publication of application:
**04.06.2014 Bulletin 2014/23**

(73) Proprietor: **Teleco S.P.A.
48022 Lugo (RA) (IT)**

(72) Inventor: **Guidorzi, Roberto
40033 CASALECCHIO DI RENO BO (IT)**

(74) Representative: **Modiano, Micaela Nadia et al
Modiano & Partners
Via Meravigli, 16
20123 Milano (IT)**

(56) References cited:
**US-B2- 7 861 593**

• **SIMANI S ET AL: "Fault diagnosis of an industrial
gas turbine prototype using a system
identification approach", CONTROL
ENGINEERING PRACTICE, PERGAMON PRESS,
OXFORD, GB, vol. 16, no. 7, 1 July 2008
(2008-07-01), pages 769-786, XP022681076, ISSN:
0967-0661, DOI:
10.1016/J.CONENGPRAC.2007.08.009 [retrieved
on 2007-10-17]**

## Description

The present invention relates to a system for structural monitoring.

As is known, maintaining civil and other structures and infrastructures, such as buildings, viaducts, bridges, etcetera, in operation requires a careful strategy that allows monitoring and ensuring, with a high level of safety, the efficiency and solidity over time of these structures (identifying immediately problems and deterioration), at the same time limiting their maintenance costs.

This requirement clearly becomes even more important if it is necessary to evaluate the performance level of structures (buildings and others) potentially damaged by traumatic events (such as for example earthquakes).

In any case, even in the absence of traumatic events, the greatest attention must be focused both on constant and careful surveillance of structural health status and on monitoring the effects of the current increasing level of vehicular traffic in large cities and in densely populated towns. More specifically, these aspects form part of the broader and more delicate context of the safeguard of buildings and architectural complexes (consider for example the historical centers of many Italian cities) that belong to the huge artistic and cultural heritage available to mankind.

According to known methods, it is therefore common to use straingauges, inclinometers or other similar sensors, arranged in one or more points of the building to be monitored and radially connected to a gathering and processing central unit, in order to collect and process data on the behavior of the structure over time, in order to be able to recognize promptly the onset of degenerative phenomena, failures, ruptures and the like.

This constructive solution, however, is not free from drawbacks.

First of all, as has been observed earlier, the data collected by the sensors must be transferred to a unit capable of processing them and supplying the technicians with useful information, in order to monitor the building or in any case the structure in which they are arranged.

This imposes on the technicians the task to arrange, during installation, sensors and wires along the building for various tens (or even hundreds) of meters, in order to connect each sensor to the central unit.

This task, besides entailing in any case high costs, can be problematic to implement when the structure that accommodates the sensors is very large or has historical/artistic value (because drilling/interventions on the walls in order to accommodate the wires are not allowed).

Therefore, the drawbacks illustrated above determine often the installation of an insufficient number of sensors, arranged only in the most easily accessible points (which will be, moreover, the only ones actually monitored).

Moreover, the transmission of analog signals up to the processing unit makes the apparatus particularly sensitive to the noise present at the survey site, and subjected to signal attenuation phenomena, with negative consequences on the correctness and precision of the measurements and of the processed data.

US 7 861 593 B2 discloses a vibration monitoring system having a combination of features as set forth in the pre-characterizing portion of the appended claim 1.

The aim of the present invention is to solve the problems described above, providing a system capable of performing an effective structural monitoring, based on measurements of the dynamic type.

Within this aim, an object of the invention is to provide a versatile and flexible system that can be installed at low cost, even on buildings and infrastructures of large size and/or with architectural constraints.

A further object of the invention is to provide a system that allows implementing any number at will, even a large number, of sensors and ensures the monitoring also of parts of the building or infrastructure where sensors are not present.

A further object of the invention is to provide a system that ensures high reliability in operation, eliminating signal attenuation signals and sensitivity to electromagnetic noise.

Yet another object of the invention is to provide a system with very high operating flexibility that can detect and process data of different types.

Yet another object of the invention is to propose a system that is scarcely invasive and easy to install even by non-specialized personnel.

In accordance with the invention, there is provided a system for the structural monitoring of complexes such as buildings, bridges, viaducts, installations, infrastructures, plants, machines and the like, as defined in the appended claims.

Further characteristics and advantages of the invention will become more apparent from the description of a possible but not exclusive embodiment of the system according to the invention, illustrated by way of non-limiting example in the accompanying drawings, wherein:

Figure 1 is a schematic view of a block diagram of the system according to the invention;
Figure 2 is a schematic block diagram of a first dynamic model;
Figure 3 is a schematic block diagram of a second dynamic model.

With particular reference to the cited figures, a system for the structural monitoring of complexes such as buildings, bridges, viaducts, installations, infrastructures, plants, machines and the like is generally designated by the reference numeral 1.

More specifically, it is specified that the complex monitored by means of the system 1 is preferably a building (or other architectural structure), of which one seeks to ensure and monitor the structural integrity

(and/or verify the presence of damage), for example following traumatic events (earthquakes) or prolonged exposure to stresses such as the vibrations caused by industrial plants or intense levels of vibration that affect heavily populated and traffic-congested cities.

This typical application will be therefore referred to constantly during the continuation of the present description, but it is useful to repeat that the use of the system 1 in different fields and for different types of complexes, depending on specific requirements, is not excluded and is in any case within the protective scope claimed herein.

For example, the system 1 might also be used for measurements related to artificial excitation of a complex by means of vibrodines for seismic tests, industrial vibration units, falling mass devices, et cetera.

According to the invention, the system 1 comprises a plurality of digital sensors 2 for accelerometric measurements of the digital type, which can be placed in a predefined point, conveniently chosen, of the complex.

More particularly, the system 1 comprises, generally, a plurality of these digital sensors 2 (a number, even a large one, chosen at will, which may be correlated to the dimensions of the complex to be monitored, to the level of detail that one wishes to obtain, etcetera), which can be placed in respective predefined points of the complex, conveniently chosen.

According to a constructive solution of considerable practical interest, these digital sensors 2 are multiaxial MEMS accelerometers (biaxial and/or triaxial and with digital output), provided with a sensitivity suitable for the type of measurement intended and with excellent extension of frequency response at low frequencies.

Moreover, each digital sensor 2 is connected, via the same bus 3, to a control and management unit 4, which is associated with a global computing module (or directly provided with it).

In general, this global computing module is capable of identifying a dynamic model, which is descriptive of the status and of the structural conditions of the complex, on the basis of the signals transmitted by the digital sensors 2 via the bus 3, which carry data related to said measurements.

According to the typical constructive solution, illustrated herein, and if the system 1 is provided with at least two digital sensors 2, the identified dynamic model is of the multivariable type.

Usefully, each digital sensor 2 is associated with a respective local calculation and transmission module: this local module is first of all capable of filtering the acquired measurements. With reference to the solution illustrated herein, it is mentioned that each local module might be provided with instructions (stored in corresponding firmware) for executing a first local procedure for filtering the acquired measurements by means of filtering techniques of the type of a Kalman filter, even extended to stochastic contexts of the EIV (Errors-In-Variables) type.

Moreover, the local module can identify, on the basis of the measurements made, a local dynamic model that is descriptive of the status and of the conditions of the complex at the respective installation point (as will be described in more detail in the paragraphs that follow, in relation to embodiment, of the invention; finally, the local module is provided with hardware, algorithms and protocols, also of a known type, intended for managing and sending the data to the unit 4, via the bus 3.

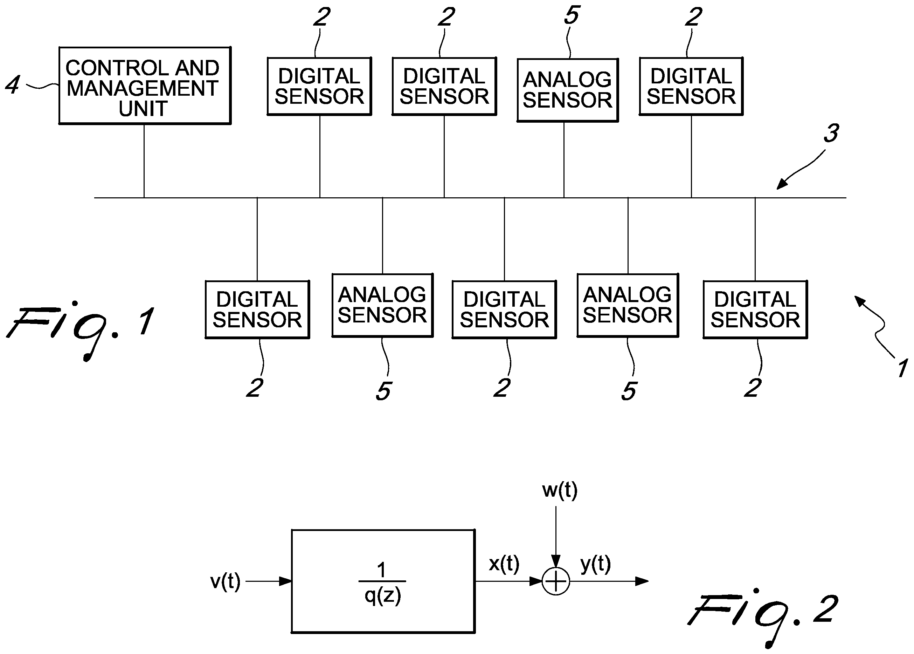

More particularly, each local module is provided with instructions (stored in respective firmware) for executing a second local procedure for identification of an EIV (Errors-In-Variables) local dynamic model of the "AR+noise" type (illustrated schematically in Figure 2), the representative equations of which are of the type:

$$q\left(z^{-1}\right)x\left(t\right)=v\left(t\right) \ ,$$

$$y\left(t\right)=x\left(t\right)+w\left(t\right) \ ,$$

where y(t) denotes the output signal of the observed process, while v(t) and w(t) represent white processes, which are not mutually correlated, with respective variances $\sigma_v^2$ , $\sigma_w^2$ , and with nil expected value, for which in other words:

$$E\left[v\left(t\right)\right]=0 \ ,$$

$$E[w(t)] = 0 \quad .$$

$q(z^{-1})$ is a polynomial, in the unit delay operator $z^{-1}$, which is descriptive of the autoregressive characteristics of the process, of the type:

$$q(z^{-1}) = 1 + \alpha_1 z^{-1} + ... + \alpha_n z^{-n} \quad ;$$

$n$ is the order of the local dynamic model being considered.

Conveniently, each local module is provided with instructions (stored in respective firmware) for executing a third local procedure, developed by the Applicant, for determining the polynomial $q(z^{-1})$ and the variances $\sigma_v^2$ , $\sigma_w^2$ , thus obtaining, thanks to the deduction of EIV local dynamic models, mode analyses that are more accurate than those obtained from the deduction of AR models, described by the single equation:

$$q(z^{-1}) y(t) = v(t) \quad .$$

More specifically, the third local procedure, which the local module is capable of executing, comprises a first step of representation of the EIV (Errors-In-Variables) local dynamic model of the "AR+noise" type by means of the following formulas:

$$(\overline{\varphi}_x^T(t) - \overline{\varphi}_e^T(t)) \overline{\theta}^* = 0 \quad ,$$

$$\overline{\varphi}_y(t) = \overline{\varphi}_x(t) + \overline{\varphi}_w(t) \quad .$$

These formulas are obtained by considering the vectors $\overline{\varphi}_x(t), \overline{\varphi}_y(t), \overline{\varphi}_w(t)$ and $\overline{\varphi}_e(t)$, defined by the expressions:

$$\overline{\varphi}_x(t) = [x(t) x(t-1) ... x(t-n)]^T \quad ,$$

$$\overline{\varphi}_y(t) = [y(t) y(t-1) ... y(t-n)]^T = [y(t) \varphi_y^T(t)] \quad ,$$

$$\overline{\varphi}_w(t) = [w(t) w(t-1) ... w(t-n)]^T \quad ,$$

$$\overline{\varphi}_e(t) = [e(t) \underbrace{0...0}_{n}]^T \quad ,$$

and an extended vector of parameters $\overline{\theta}^*$ given by:

$$\overline{\theta}^* = [1 \, \alpha_1 ... \alpha_n]^T = [1 \, \theta^{*T}]^T \quad ,$$

where $\theta^*$ indicates the vector of the actual parameters of the process.

At this point, the third local procedure provides, in a second step, for considering the covariance matrices $R_{xe}$ and $R_y$ given by:

$$R_{xe} = E[(\overline{\varphi}_x(t) - \overline{\varphi}_e(t))(\overline{\varphi}_x(t) - \overline{\varphi}_e(t))^T] \quad ,$$

$$R_y = E\left[\overline{\varphi}_y(t)\overline{\varphi}_y^T(t)\right] \quad ,$$

that thus make it possible (thanks to the hypotheses on v(t) and w(t) and to the new representation of the EIV model, illustrated earlier) to obtain the relations:

$$R_{xe}\overline{\theta}^* = 0 \quad ,$$

$$R_y = R_{xe} + \tilde{R}^* \quad ,$$

where:

$$\tilde{R}^* = diag\left[\sigma_e^{2\,*} + \sigma_w^{2\,*}, \sigma_w^{2\,*} I_n\right] \quad .$$

The matrix $R_y$ can be obtained as a sampling estimate from the observations y(1), y(2), ..., y(L), where L is the number of observations available, whereas the autoregressive coefficients of the local dynamic model cannot be calculated directly on the basis of the relations defined above, because the variances $\sigma_v^{2\,*}$ and $\sigma_w^{2\,*}$ of the two white processes v(t) and w(t) are not known.

In order to be able to estimate these variances $\sigma_v^{2\,*}$ , $\sigma_w^{2\,*}$ , and the autoregressive coefficients, the third local procedure comprises a third estimating step, which provides in a first step for considering the family of all the positive semidefinite diagonal matrices $\tilde{R}$ of the type

$$\tilde{R} = diag\left[\sigma_e^2 + \sigma_w^2, \sigma_w^2 I_n\right] \quad ,$$

such that

$$R_y - \tilde{R} \geq 0, \qquad min\ eig\,(R_y - \tilde{R}) = 0 \quad .$$

The family that satisfies the conditions given above is defined by the pairs $\sigma_v^2$ , $\sigma_w^2$ such that

$$\sigma_w^2 \in \left[0, \sigma_{w\,max}^2\right]$$

and

$$\sigma_e^2 = \sigma_y^2 - \sigma_w^2 + r^T \theta(\sigma_w^2) \quad ,$$

where

$$\sigma_{w\,max}^2 = min\ eig\,(R_y)$$

and

$$\theta(\sigma_w^2) = -\left(R - \sigma_w^2 I_n\right)^{-1} r \quad ,$$

while the scalar $\sigma^2_y$, the vector r and the matrix R are defined by the following partition of $R_y$:

$$R_y = \begin{bmatrix} \sigma^2_y & r^T \\ r & R \end{bmatrix} \, .$$

In this manner, each value of $\sigma^2_w \in [0, \sigma^2_{w\,max}]$ determines a respective estimate of the coefficients of

$$\theta(\sigma^2_w) = -(R - \sigma^2_w I_n)^{-1} r \; ;$$ moreover, the actual variance $\sigma^{2*}_w$ of w(t) also belongs to $[0, \sigma^2_{w\,max}]$ and the associated vector of coefficients coincides with the one $\theta^*$ of the actual parameters of the process, i.e., the relation

$$\theta(\sigma^{2*}_w) = \theta^*$$

applies.

In order to estimate $\sigma^{2*}_w$ (and therefore $\theta^*$), within the allowable interval, the third step provides, in a second phase, for the definition of a cost function $J(\sigma^2_w)$ given by:

$$J(\sigma^2_w) = \| R^h_y \bar{\theta}(\sigma^2_w) \|^2_2 = \bar{\theta}(\sigma^2_w)^T (R^h_y)^T R^h_y \bar{\theta}(\sigma^2_w), \quad \sigma^2_w \in [0, \sigma^2_{w\,max}]$$

where:

$$\bar{\theta}(\sigma^2_w) = [1 \; \theta^T(\sigma^2_w)]^T \, ,$$

$$R^h_y = E[\varphi^h_y(t) \varphi^T_y(t)] \, ,$$

$$\varphi^h_y(t) = [y(t-n-1) \; y(t-n-2) \dots y(t-n-q)]^T \, ,$$

and q≥n is a parameter that can be chosen in order to optimize the ratio between accuracy and computing time of the procedure.
At this point, the third step provides for a third phase of introducing a set of q Yule-Walker equations (of high order) of the type

$$R^h_y \bar{\theta}^* = 0 \, ,$$

that is not used to estimate directly the vector of parameters $\theta^*$ but to calculate the cost function.

Subsequently, the third step provides, in a fourth phase, for the estimation of $\sigma^{2*}_w$ by minimizing $J(\sigma^2_w)$ on $[0, \hat{\sigma}^2_{wmax}]$ with

$$\hat{\sigma}^2_{wmax} = min \; eig(\hat{R}_y)$$

replacing the covariance matrices $R_y$ and $R_y^h$ with the following sampling expressions:

$$\hat{R}_y = \frac{1}{N-n} \sum_{t=n+1}^{t=N} \varphi_y(t)\varphi_y^T(t) \quad ,$$

$$\hat{R}_y^h = \frac{1}{N-n-q} \sum_{t=n+q+1}^{t=N} \varphi_y^h(t)\varphi_y^{hT}(t) \quad ;$$

the descriptive modes of the resonance frequencies of the complex are then defined by the zeros of the polynomial $q(z^{-1})$, the parameters of which are the components of $\theta^*$.

Advantageously, the global computing module, with which the unit 4 is provided, has instructions (stored in its firmware or in software thereof) for executing a global procedure for the acquisition and analysis in real time of the synchronous data transmitted by all the digital sensors 2 and processed by the local modules, for identifying the multivariable dynamic model of the complex.

With reference to the non-exclusive constructive solution illustrated herein, the multivariable dynamic model is an EIV model of the "AR+noise" type with minimal parameterization associated with a direction in noise space, and is capable of describing the conditions of the complex both in the predefined points of installation of the digital sensors 2 and in the regions of the complex that are interposed between said predefined points.

In this manner, therefore, whereas the local dynamic models allow obtaining an analysis of the integrity of the structure only in the predefined points in which the respective digital sensors 2 have been installed (and at the most in their immediate vicinity), by means of the multivariable dynamic model (obtained by acquiring synchronous measurements from the various digital sensors 2) it is possible to provide not only the power spectra of the individual local measurements but also the cross-spectra that describe the status of the areas of the complex that connect the predefined points in which the digital sensors 2 have been installed.

The constant monitoring of the data supplied by the digital sensors 2, and of the processing obtained by means of the multivariable dynamic model, as well as by means of the local dynamic models, allows constant evaluation and monitoring of the status of structural integrity of the complex and to detection of the presence of damage due to earthquakes or to stresses of another type, verifying deviations with respect to previous findings.

It is useful to note that the choice to use EIV models with minimal parameterization, as reported above, allows identifying not only said EIV models, but also the respective parameters, so as to allow their use in the diagnostic field. Indeed to allow the use of multivariable models with minimal parameterization (automatic for scalar models with single output), the system 1 according to the invention provides for the use of "AR+noise" EIV models, described by a convenient canonical representation, this fundamental property not being shared by other classes of multivariable models.

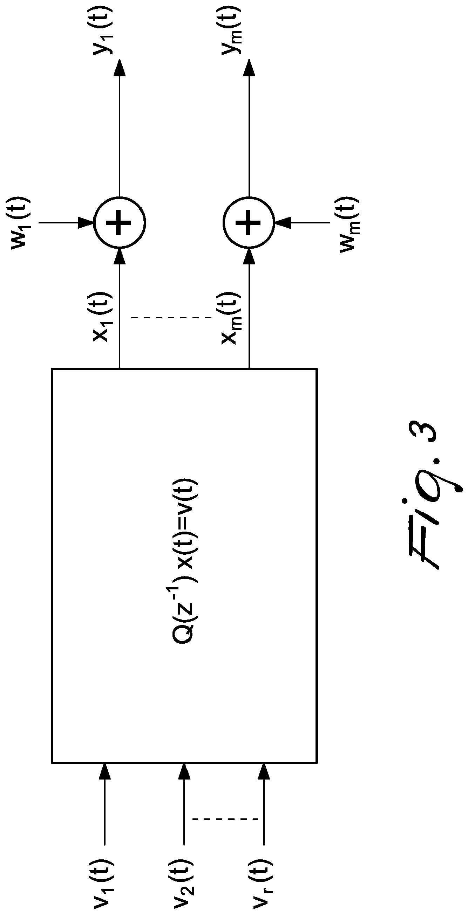

More particularly, with further reference to the non-exclusive constructive solution illustrated herein, the EIV model of the "AR+noise" type with minimal parameterization used (chosen because it has a more realistic stochastic context than common AR multivariable models, which model the mismatch between the data and the models in a very simple manner, by means of an equation error described by a white vector process) is shown schematically in Figure 3 and is defined by the following equations:

$$x(t) = Q_1 x(t-1) + \ldots + Q_\mu x(t-\mu) + v(t) \quad ,$$

$$y(t) = x(t) + w(t) \quad ,$$

where $w(t) = [w_1(t)w_2(t)\ldots w_m(t)]^T$ is a vector of elements $w_i(t)$ with $(i=1,\ldots,m)$ constituted by white processes, not correlated to the components of $v(t)$, with nil expected value and with variances $\sigma_{wi}^2$, and $y(t) = [y_1(t)y_2(t)\ldots y_m(t)]^T$ is the vector of the m observations.

It must be noted, however, that since the hypothesis of mutual lack of correlation has not been introduced, the covariance matrix of $w(t)$ generally will not be diagonal, and this is necessary in order to be able to describe in a realistic manner the measurements performed by multiaxial digital sensors 2.

More particularly, the global procedure cited above provides, in a first passage, for estimating the covariance matrix $\Sigma_{oe}$ of the observation errors, performing this estimate on sequences without useful signals ("silent frames").

Subsequently, the global procedure provides, in a second passage, for considering the covariance matrix $\Sigma^*$, which is defined by

$$\sum\nolimits^* = \lim_{N \to \infty} \left( \frac{H^{*T} H^*}{N} \right)$$

with

$$H^* = \left[ H(x_1) H(x_2) \dots H(x_m) \right] \quad,$$

where $H(x_i)$ is a Hankel matrix of the type

$$H(x_i) = \begin{bmatrix} x_i(1) & x_i(2) & \dots & x_i(\mu) \\ x_i(2) & x_i(3) & \dots & x_i(\mu+1) \\ \vdots & \vdots & \dots & \vdots \\ x_i(N) & x_i(N+1) & \dots & x_i(L-1) \end{bmatrix} \quad.$$

Subsequently, the global procedure allows, in a third passage, estimating the parameters of the process on the basis of the covariance matrix $\Sigma$ of the data, which, filtered with respect to additive noise in order to obtain $\Sigma^*$, allows using the algorithms used for the estimation of the AR models.

Considering in fact the covariance matrix of the data $\Sigma$, one obtains

$$\sum = \lim_{N \to \infty} \left( \frac{H^T H}{N} \right) = \sum\nolimits^* + \sum\nolimits_{oe}$$

considering that y(t)=x(t)+w(t) and that v(t) and w(t), and likewise consequently x(t) and w(t), are mutually uncorrelated, and where the matrix H is given by

$$H = \left[ H(y_1) H(y_2) \dots H(y_m) \right] \quad.$$

Moreover, $\Sigma_{oe}$, is the covariance matrix of the observation errors, which is known because it is measured during the sequences lacking useful signals, as has already been observed.

**[0058]** * From what has been indicated above, it is possible to estimate $\Sigma^*$ with the formula

$$\sum\nolimits^* = \sum - \sum\nolimits_{oe}$$

and therefore reduce the problem of the identification of an "AR+noise" model to the problem of the identification of an AR model (in the third passage of the global procedure), substituting $N\Sigma$ with $H^T H$.

More particularly, the third passage provides for applying the relation

$$\sum = \sum\nolimits^* + \sum\nolimits_{oe}$$

to the sampling quantities available, by means of the relation

$$H^{*T} H^{*} = H^{T} H - N \sum_{oe}$$

and one obtains, asymptotically, thanks to the hypothesis of lack of correlation between v(t) and w(t),

$$H^{T} \overset{\circ}{y_{i}} = H^{*T} \overset{*\circ}{x_{i}} \quad \text{where}$$

$$\overset{\circ}{y_{i}} = [y_{i}(\mu+1), y_{i}(\mu+2)..., y_{i}(L)]^{T} ,$$

$$\overset{*\circ}{x_{i}} = [x_{i}(\mu+1), x_{i}(\mu+2)..., x_{i}(L)]^{T} .$$

If the formula $H^{T} H - N \sum_{oe}$ leads to positive undefined matrices $\sum^{*}$ and/or to unstable models, the third passage provides for performing a non-polarized estimate with minimal variance of the parameters of the multivariable dynamic model by means of the formula

$$\hat{\theta}_{i} = (H^{T} H - kN \sum_{oe})^{-1} H^{T} y_{i}^{o} \qquad (i = 1,..., m) ,$$

where k is chosen so as to comply both with the stability constraint and with the condition

$$H^{T} H - kN \sum_{oe} > 0 ,$$

where 0 < k < 1.

As has already been observed, $\sum_{oe}$ can be approximated by the sampling covariance matrix of sequences lacking useful information, (this can be verified by means of a whiteness test on the components of y(t)).

Positively, the system 1 according to the invention can optionally comprise, in addition to the digital sensors 2, at least one analog sensor 5, preferably (but not exclusively) selected from a strain gauge, a load cell, a movement measurement device, a speed measurement device, a linear acceleration measurement device, an angular acceleration measurement device, a gyroscope and the like.

This analog sensor 5 is connected to a device for the acquisition and local processing of analog measurements, in order to filter and send the information gathered by said analog sensor 5 to the control and management unit 4 via the bus 3 (as shown schematically in Figure 1 by way of non-limiting example).

More particularly, the system 1 can comprise any number of these analog sensors 5 (each one of which is connected to a respective acquisition and local processing device), selected of the same type (among the ones listed above or also among others) or even of different types, without thereby abandoning the protective scope claimed herein. It is useful, however, to repeat that the possibility that the system 1 might not comprise any analog sensor 5 is also envisaged and is within the protective scope claimed herein.

Conveniently, the control and management unit 4 is provided with network connection means, for the remote analysis of the data, of the information and of the models developed according to the methods illustrated above. These connection means also allow the download of the data for their optional transfer to remote databases.

It is useful to note that the control and management unit 4 can also be provided with software packages for the configuration of the entire system 1 and/or for the storage of the received data, be they related to the specific sensors 2, 5 or to the global analysis of the complex performed by means of the multivariable dynamic model.

The use of the system 1 according to the invention, for the monitoring of complexes of various types, such as public buildings, private buildings and/or industrial buildings, and others, entails therefore the installation of a plurality of digital sensors 2, in respective preset points, capable of acquiring accelerometric measurements, which can be filtered and sent to the central unit 4 via the bus 3 to which the corresponding local modules are connected.

Moreover, these local modules are capable of developing EIV scalar local models (with single output) of the "AR+noise" type by means of the algorithms for filtering and identification described above, developed by the Applicant, which can be implemented in the firmware of the local modules themselves; this allows a significant reduction in the quantity of data to be sent to the unit 4 and, at the same time, providing the user with information on the status of the complex (in the preset points and their vicinity).

Moreover, in order to obtain a more complete picture of the status of the integrity of the monitored complex, the system 1 can comprise additional analog sensors 5, in turn provided with respective devices for the acquisition and local processing (as well as filtering) of analog measurements, optionally capable of implementing additional functions (for example linearization, compensation of thermal drift, etcetera), made appropriate by specific application requirements.

By means of the analog sensors 5 it is thus possible to manage a very extensive range of types of measurement, providing the system 1 according to the invention with a very high operating flexibility.

As has been shown, the transmission of the data from the sensors 2, 5 to the unit 4 is entrusted to a bus 3, to which the sensors 2, 5 can be connected: the choice to resort to a bus (the only element that is actually connected to the unit 4) allows the provision of systems 1 that are far less invasive than the apparatuses of the known type, which resort to accelerometric sensors of the analog type, each of which must be connected individually to the element assigned to data conversion and processing.

This allows, therefore, performing an effective structural monitoring, by means of a versatile and flexible system 1, that can be installed at low cost (and with minimal impact on walls, and other existing elements) even in buildings and infrastructures of large size and/or with historical/artistic value (even if subject to particular constraints), because it requires very limited wiring with scarcely invasive topology (the bus 3), allowing therefore, in turn, also the use of a large number of sensors 2, 5.

Moreover, the digital transmission of the data via bus allows connections over large distances, ensuring the possibility of optimum coverage of the complex, even if it is large and/or on a plurality of stories, without incurring the attenuations and noise sensitivity that are typical to accelerometric sensors of the analog type.

The data carried by the bus (which arrive from the digital sensors 2 and from the analog sensors 5) are therefore sent in packets of synchronous measurements to the unit 4, which is provided with a real-time operating system (indispensable for optimum management of synchronous acquisitions) and is accessible via the network for the download of the data and for remote monitoring.

Thanks to the algorithms described above (also developed by the Applicant, and implementable in the firmware or in software of the unit 4 and/or an additional computing element associated therewith), the data sent to the unit 4 itself allow the identification of a multivariable dynamic model with EIV minimal parameterization of the "AR+noise" type, that offers to users the possibility of receiving global indications on the integrity of the examined structure, both in relation to the preset points in which the sensors 2, 5 are installed and to the regions comprised between them.

In practice it has been found that the system according to the invention fully achieves the intended aim, since the use of at least one digital sensor for accelerometric measurements, connected via a digital bus to a control and management unit, provided with a global computing module, capable of evaluating, by means of identification procedures, a dynamic model, that describes the status and the structural conditions of the complex, allows provision of a system capable of performing effective structural monitoring based on measurements of the dynamic type.

The invention thus conceived is susceptible of numerous modifications and variations, all of which are within the scope of the appended claims; all the details may further be replaced with other technically equivalent elements.

In the exemplary embodiments shown, individual characteristics, given in relation to specific examples, may actually be interchanged with other different characteristics that exist in other exemplary embodiments.

In practice, the materials used, as well as the dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

**Claims**

1. A system for the structural monitoring of complexes such as buildings, bridges, viaducts, installations, infrastructures, plants and machines, comprising a plurality of digital sensors (2) for accelerometric measurements, which can be arranged in respective predefined points of the complex and can be connected, via a digital bus (3), to a control and management unit (4), which is associated with a global computing module for identification, on the basis of the signals transmitted by said at least one digital sensor (2) over said digital bus (3) and carrying data related to the measurements, of a multivariable dynamic model which is descriptive of the status and of the structural conditions of the complex, said digital sensors (2) being chosen of the type of multiaxial MEMS accelerometers, **characterized in that** each one of said digital sensors (2) is associated with a respective local calculation and transmission module, for filtering the acquired measurements and/or for the identification, on the basis of the measurements, of a local dynamic model that is descriptive of the status and of the conditions of the complex at the respective installation point and/or for the management and transmission of said data to said unit (4) via said bus (3), each one of said local modules having instructions for executing a first local procedure for filtering the measurements acquired by means of filtering techniques of the type of the Kalman filter, even extended to stochastic contexts of the EIV (Errors-In-Variables) type, each one of said local modules being provided with instructions for executing a second local procedure for identification of an EIV (Errors-In-Variables) local dynamic model of the "AR+noise" type, the equations that represent said local dynamic model being of the type

$$q(z^{-1})x(t)=v(t)$$

$$y(t)=x(t)+w(t)$$

y(t) denoting the signal in output of the observed process, v(t) and w(t) representing white processes with nil expected value which are not mutually correlated and have respective variances $\sigma_v^2$ , $\sigma_w^2$ , q(z$^{-1}$) being a polynomial, in the unit delay operator z$^{-1}$, which is descriptive of the autoregressive characteristics of the process and of the type

$$q(z^{-1})=1+\alpha_1 z^{-1}+...+\alpha_n z^{-n}$$

where n is the order of said local dynamic model being considered.

2. The system according to claim 1, **characterized in that** each one of said local modules has instructions for executing a third local procedure for determining said polynomial q(z$^{-1}$) and said variances $\sigma_v^2$ , $\sigma_w^2$ , said third local procedure comprising a first step of representation of said EIV (Errors-In-Variables) local dynamic model of the "AR+noise" type by means of the formulas

$$(\bar{\varphi}_x^T(t)-\bar{\varphi}_e^T(t))\bar{\theta}^*=0 \quad,$$

$$\bar{\varphi}_y(t)=\bar{\varphi}_x(t)+\bar{\varphi}_w(t) \quad,$$

obtained by considering the vectors $\overline{\varphi_x}(t)$, $\overline{\varphi_y}(t)$, $\overline{\varphi_w}(t)$, $\overline{\varphi_e}(t)$, defined by the expressions

$$\bar{\varphi}_x(t)=[x(t)x(t-1)...x(t-n)]^T \quad,$$

$$\bar{\varphi}_y(t)=[y(t)y(t-1)...y(t-n)]^T=[y(t)\varphi_y^T(t)] \quad,$$

$$\bar{\varphi}_w(t)=[w(t)w(t-1)...w(t-n)]^T \quad,$$

$$\bar{\varphi}_e(t)=[e(t)\underbrace{0...0}_{n}]^T \quad,$$

and an extended vector of parameters $\bar{\theta}^*$, given by

$$\bar{\theta}^*=[1\,\alpha_1...\alpha_n]^T=[1\,\theta^{*T}]^T \quad,$$

where $\theta^*$ indicates the vector of the actual parameters of the process,
said third local procedure providing, in a second step, for considering the covariance matrices

$$R_{xe} = E\left[(\bar{\varphi}_x(t) - \bar{\varphi}_e(t))(\bar{\varphi}_x(t) - \bar{\varphi}_e(t))^T\right] \ ,$$

$$R_y = E\left[\bar{\varphi}_y(t)\bar{\varphi}_y^T(t)\right] \ ,$$

said second step leading to the relations

$$R_{xe}\,\bar{\theta}^* = 0 \ ,$$

$$R_y = R_{xe} + \tilde{R}^* \ ,$$

where

$$\tilde{R}^* = diag\left[\sigma_e^{2*} + \sigma_w^{2*}, \sigma_w^{2*}\, I_n\right]$$

with $R_y$ obtained as a sampling estimate from the observations y(1), y(2), ..., y(L), where L is the number of observations available, said third local procedure comprising a third step of estimating the variances $\sigma_v^{2*}$, $\sigma_w^{2*}$ and the autoregressive coefficients, said third step providing, in a first phase, for considering the family of all the positive semidefinite diagonal matrices $\tilde{R}$ of the type

$$\tilde{R} = diag\left[\sigma_e^2 + \sigma_w^2, \sigma_w^2\, I_n\right] \ ,$$

such that

$$R_y - \tilde{R} \geq 0, \qquad min\ eig\,(R_y - \tilde{R}) = 0 \ ,$$

said family being defined by the pairs $\sigma_v^2$, $\sigma_w^2$, such that

$$\sigma_w^2 \in \left[0, \sigma_{w\,max}^2\right]\ \ and\ \ \sigma_e^2 = \sigma_y^2 - \sigma_w^2 + r^T\theta(\sigma_w^2) \ ,$$

where

$$\sigma_{w\,max}^2 = min\ eig(R_y)\ \ and\ \ \theta(\sigma_w^2) = -(R - \sigma_w^2 I_n)^{-1}r \ ,$$

the scalar $\sigma_y^2$, the vector r and the matrix R being defined by the following partition of $R_y$

$$R_y = \begin{bmatrix} \sigma_y^2 & r^T \\ r & R \end{bmatrix} \ ,$$

each value of $\sigma_w^2 \in [0, \sigma_{w\,max}^2]$ determining a respective estimate of the coefficients of $\theta(\sigma_w^2) = -(R - \sigma_w^2 I_n)^{-1} r$ , where $\sigma_w^{2*}$ , variance of w(t), belongs to $[0, \sigma_{w\,max}^2]$ and $\theta(\sigma_w^{2*}) = \theta^*$ , said third step providing, in a second phase, for the estimate of $\sigma_w^{2*}$ within the allowable interval and accordingly of θ*, the definition of a cost function $J(\sigma_w^2)$ given by

$$J(\sigma_w^2) = \| R_y^h \bar{\theta}(\sigma_w^2) \|_2^2 = \bar{\theta}(\sigma_w^2)^T (R_y^h)^T R_y^h \bar{\theta}(\sigma_w^2), \quad \sigma_w^2 \in [0, \sigma_{w\,max}^2]$$

where

$$\bar{\theta}(\sigma_w^2) = [1\; \theta^T(\sigma_w^2)]^T \;,$$

$$R_y^h = E[\varphi_y^h(t)\varphi_y^T(t)] \;,$$

$$\varphi_y^h(t) = [y(t-n-1)\, y(t-n-2)\,...\, y(t-n-q)]^T \;,$$

q≥n being a parameter chosen so as to optimize the ratio between accuracy and computing time, said third step providing, for the computing of said cost function, for a third phase of introduction of a set of q Yule-Walker equations of the type

$$R_y^h \bar{\theta}^* = 0 \;,$$

said third step providing, in a fourth phase, for the estimate of $\sigma_w^{2*}$ , obtained by minimizing $J(\sigma_w^2)$ on $[0, \hat{\sigma}_{wmax}^2]$ with

$$\hat{\sigma}_{wmax}^2 = min\; eig(\hat{R}_y) \;,$$

and

$$\hat{R}_y = \frac{1}{N-n} \sum_{t=n+1}^{t=N} \varphi_y(t)\varphi_y^T(t) \;,$$

$$\hat{R}_y^h = \frac{1}{N-n-q} \sum_{t=n+q+1}^{t=N} \varphi_y^h(t)\varphi_y^{hT}(t) \;,$$

the descriptive modes of the resonance frequencies of the complex being defined by the zeros of said polynomial q(z$^{-1}$), the parameters of said polynomial q(z$^{-1}$) being the components of θ*.

3. The system according to one or more of the preceding claims, **characterized in that** said global computing module is provided with instructions for executing a global procedure for the acquisition and analysis in real time of the synchronous data transmitted by said digital sensors (2) and processed locally by said local modules, for the consequent identification of said multivariable dynamic model of the complex, said multivariable dynamic model being an EIV model of the "AR+noise" type with minimal parameterization associated with a direction in noise space, and being descriptive of the conditions of the complex in the predefined points of installation of said digital sensors (2) and in the regions of the complex that are interposed between the predefined points, said EIV model of the "AR+noise" type with minimal parameterization being defined by the following equations

$$x(t) = Q_1 x(t-1) + \ldots + Q_\mu x(t-\mu) + v(t) \quad,$$

$$y(t) = x(t) + w(t) \quad,$$

where $w(t) = [w_1(t) w_2(t) \ldots w_m(t)]^T$ is a vector of elements $w_i(t)$ with (i=1,...,m) constituted by white processes, not correlated with the components of v(t), with nil expected value and with variances $\sigma_{wi}^2$, $y(t) = [y_1(t) y_2(t) \ldots y_m(t)]^T$ being the vector of the m observations.

4. The system according to claim 3, **characterized in that** said global procedure provides, in a first passage, for estimating, on sequences lacking useful signals, the covariance matrix $\Sigma_{oe}$ of the observation errors, said global procedure providing, in a second passage, for considering the covariance matrix $\Sigma^*$, which is defined by

$$\sum\nolimits^* = \lim\nolimits_{N \to \infty} \left( \frac{H^{*T} H^*}{N} \right)$$

where

$$H^* = [H(x_1) H(x_2) \ldots H(x_m)]$$

H($x_i$) being a Hankel matrix of the type

$$H(x_i) = \begin{bmatrix} x_i(1) & x_i(2) & \ldots & x_i(\mu) \\ x_i(2) & x_i(3) & \ldots & x_i(\mu+1) \\ \vdots & \vdots & \ldots & \vdots \\ x_i(N) & x_i(N+1) & \ldots & x_i(L-1) \end{bmatrix} \quad,$$

said global procedure allowing, in a third passage, an estimation of the parameters of the process on the basis of the covariance matrix $\Sigma$ of said data, filtered with respect to additive noise, in order to obtain $\Sigma^*$.

5. The system according to claim 4, **characterized in that** said third passage provides for considering the covariance matrix of said data $\Sigma$, the following relation being valid

$$\sum = \lim\nolimits_{N \to \infty} \left( \frac{H^T H}{N} \right) = \sum\nolimits^* + \sum\nolimits_{oe}$$

and being obtained by considering that y(t)=x(t)+w(t) and that v(t) and w(t), and likewise consequently x(t) and w(t) are mutually not correlated, and where

$$H = [H(y_1) H(y_2) ... H(y_m)] \ ,$$

and where $\Sigma_{oe}$ is the covariance matrix of the observation errors, measured during said sequences lacking useful signals, for subsequent reduction of the problem of the identification of an "AR+noise" model to the problem of the identification of an AR model, in said third passage, substituting $N\Sigma$ with $H^T H$.

6. The system according to claim 5, **characterized in that** said third passage provides for applying the relation

$$\sum = \sum{}^{*} + \sum_{oe}$$

to the sampling quantities available, by means of the relation

$$H^{*T} H^{*} = H^T H - N \sum_{oe}$$

where, thanks to the hypothesis of lack of correlation between v(t) and w(t), asymptotically

$$H^T y_i^{\circ} = H^{*T} x_i^{*\circ}$$

where

$$y_i^{\circ} = [y_i(\mu+1), y_i(\mu+2)..., y_i(L)]^T \ ,$$

$$x_i^{*\circ} = [x_i(\mu+1), x_i(\mu+2)..., x_i(L)]^T \ ,$$

if the relation $H^T H - N\Sigma_{oe}$ leads to positive undefined matrices and/or to unstable models, said third passage providing for performing a non-polarized estimate and with minimal variance of said parameters of said multivariable dynamic model by means of the formula

$$\hat{\theta}_i = (H^T H - kN \sum_{oe})^{-1} H^T y_i^{o} \qquad (i = 1,..., m)$$

with k chosen so as to comply both with the stability constraint and with the condition

$$H^T H - kN \sum_{oe} > 0 \ ,$$

with $0 < k < 1$, $\Sigma_{oe}$ being deducible by calculation of the sampling covariance matrix of sequences lacking useful information, which can be verified by means of a whiteness test on the components of y(t).

7. The system according to one or more of the preceding claims, **characterized in that** it comprises at least one analog sensor (5), preferably selected from a strain gauge, a load cell, a movement measurement device, a speed measurement device, a linear acceleration measurement device, an angular acceleration measurement device, a gyroscope and the like, said at least one analog sensor (5) being connected to a device for the acquisition and local processing of analog measurements, in order to filter and send the information gathered by said at least one analog sensor (5) to said control and management unit (4) via said bus (3).

8. The system according to one or more of the preceding claims, **characterized in that** said control and management unit (4) is provided with network connection means, for the remote analysis of said data, of said information and of said models and for the download of said data and their optional transfer onto remote databases.

**Patentansprüche**

1. Ein System zur strukturellen Überwachung von Komplexen wie Gebäuden, Brücken, Viadukten, Installationen, Infrastrukturen, Anlagen und Maschinen, das eine Vielzahl digitaler Sensoren (2) für Beschleunigungsmessungen umfasst, die an entsprechenden vordefinierten Punkten des Komplexes angeordnet werden können und über einen digitalen Bus (3) mit einer Steuerungs- und Verwaltungseinheit (4) verbunden werden können, welche mit einem globalen Rechenmodul verknüpft ist zur Identifikation, auf der Grundlage der Signale, die von dem mindestens einen digitalen Sensor (2) über den digitalen Bus (3) übertragen werden und mit den Messungen verknüpfte Daten tragen, eines dynamischen Mehrvariablen-Modells, welches den Status und die strukturellen Bedingungen des Komplexes beschreibt, wobei die digitalen Sensoren (2) gewählt sind aus der Art mehrachsiger MEMS-Beschleunigungsmesser, **dadurch gekennzeichnet, dass** jeder der digitalen Sensoren (2) verknüpft ist mit einem entsprechenden lokalen Berechnungs- und Übertragungsmodul, zum Filtern der erfassten Messungen und/oder zur Identifikation, auf der Grundlage der Messungen, eines lokalen dynamischen Modells, das den Status und die Bedingungen des Komplexes an dem jeweiligen Installationspunkt beschreibt, und/oder zur Verwaltung und Übertragung der Daten an die Einheit (4) über den Bus (3), wobei jedes der lokalen Module Anweisungen zur Durchführung einer ersten lokalen Prozedur zum Filtern der Messungen hat, die durch Filtertechniken vom Typ des Kaiman-Filters durchgeführt werden, erweitert selbst auf stochastische Zusammenhänge vom EIV,-Errors-In-Variables-,-Typ, wobei jedes der lokalen Module mit Anweisungen ausgestattet ist, um eine zweite lokale Prozedur zur Identifikation eines lokalen dynamischen EIV,-Errors-In-Variables-,-Modells vom "AR+Noise"-Typ durchzuführen, wobei die Gleichungen, die das lokale dynamische Modell darstellen, vom Typ

$$q(z^{-1})x(t) = v(t)$$

$$y(t) = x(t) + w(t)$$

sind, wobei y(t) das Signal der Ausgabe des beobachteten Prozesses bezeichnet, v(t) und w(t) für weiße Prozesse mit einem Erwartungswert von Null stehen, die nicht miteinander korrelieren und entsprechende Varianzen

$$\sigma_v^2 \, , \quad \sigma_w^2$$

haben; wobei $q(z^{-1})$ ein Polynom im Unit Delay Operator $z^{-1}$ ist, das die autoregressiven Eigenschaften des Prozesses beschreibt und vom Typ

$$q(z^{-1}) = 1 + \alpha_1 z^{-1} + ... + \alpha_n z^{-n}$$

ist, worin n die Größenordnung des betrachteten lokalen dynamischen Modells ist.

2. Das System gemäß Anspruch 1, **dadurch gekennzeichnet, dass** jedes der lokalen Module Anweisungen zur Durchführung einer dritten lokalen Prozedur hat, um das Polynom $q(z^{-1})$ und die Varianzen

$$\sigma_v^2 \, , \quad \sigma_w^2 \, ,$$

zu bestimmen, wobei die dritte lokale Prozedur einen ersten Schritt der Darstellung des lokalen dynamischen EIV,-Errors-In-Variables-,-Modells vom "AR+Noise"-Typ mit Hilfe folgender Formeln umfasst:

$$(\bar{\varphi}_x^T(t) - \bar{\varphi}_e^T(t))\,\bar{\theta}^* = 0 \, ,$$

$$\vec{\phi}_y(t) = \vec{\phi}_x(t) + \vec{\phi}_w(t) \quad ,$$

die gewonnen werden durch Betrachtung der Vektoren

$$\vec{\phi}_x(t) \quad , \quad \vec{\phi}_y(t) \quad , \quad \vec{\phi}_w(t) \quad , \quad \vec{\phi}_e(t)$$

definiert durch die Ausdrücke

$$\vec{\phi}_x(t) = [\, x(t)\, x(t-1) \ldots x(t-n)\,]^T \quad ,$$

$$\vec{\phi}_y(t) = [\, y(t)\, y(t-1) \ldots y(t-n)\,]^T = [\, y(t)\, \phi_y^T(t)\,] \quad ,$$

$$\vec{\phi}_w(t) = [\, w(t)\, w(t-1) \ldots w(t-n)\,]^T \quad ,$$

$$\vec{\phi}_e(t) = [\, e(t)\, \underbrace{0 \ldots 0}_{n}\,]^T \quad ,$$

und eines erweiterten Vektors von Parametern

$$\vec{\theta}^*$$

,

erhalten durch

$$\vec{\theta}^* = [\, 1\, \alpha_1 \ldots \alpha_n\,]^T = [\, 1\, \theta^{*T}\,]^T \quad ,$$

worin θ* den Vektor der aktuellen Parameter des Prozesses angibt,
wobei die dritte lokale Prozedur in einem zweiten Schritt zur Betrachtung der Kovarianz-Matrizen

$$R_{xe} = E\big[(\vec{\phi}_x(t) - \vec{\phi}_e(t))(\vec{\phi}_x(t) - \vec{\phi}_e(t))^T\big] \quad ,$$

$$R_y = E\big[\vec{\phi}_y(t)\phi_y^{\,T}(t)\big] \quad ,$$

führt
und der zweite Schritt zu den Beziehungen führt,

$$R_{xe}\, \vec{\theta}^* = 0 \quad ,$$

$$R_y = R_{xe} + \tilde{R}^* \quad ,$$

worin

$$\tilde{R}^* = diag\big[\sigma_e^{2*} + \sigma_w^{2*}, \sigma_w^{2*} I_n\big]$$

wobei $R_y$ als Probenschätzung aus den Beobachtungen y(1), y(2), ..., y(L) gewonnen wird, worin L die Anzahl verfügbarer Beobachtungen ist, wobei die dritte lokale Prozedur einen dritten Schritt der Schätzung der Varianzen

$$\sigma_v^{2*} \quad , \quad \sigma_w^{2*}$$

und der autoregressiven Koeffizienten umfasst, wobei der dritte Schritt in einer ersten Phase die Berücksichtigung der Familie aller positiven semidefiniten Diagonalmatrizen

$$\tilde{R}$$

vom Typ

$$\tilde{R} = diag\left[\sigma_e^2 + \sigma_w^2, \sigma_w^2 I_n\right] \quad,$$

umfasst, so dass

$$R_y - \tilde{R} \geq 0, \qquad min\ eig\left(R_y - \tilde{R}\right) = 0 \quad,$$

wobei die Familie durch die Paare

$$\sigma_v^2 \quad , \quad \sigma_w^2$$

definiert ist, so dass

$$\sigma_w^2 \in \left[0, \sigma_{w\ max}^2\right] \qquad\qquad \sigma_e^2 = \sigma_y^2 - \sigma_w^2 + r^T \theta\left(\sigma_w^2\right) \quad,$$

und

worin

$$\sigma_{w\ max}^2 = min\ eig\left(R_y\right)$$

$$\theta\left(\sigma_w^2\right) = -\left(R - \sigma_w^2 I_n\right)^{-1} r \quad,$$

und

wobei der Skalar

$$\sigma_y^2 \quad,$$

der Vektor r und die Matrix R durch folgende Teilung von $R_y$ definiert sind:

$$R_y = \begin{bmatrix} \sigma_y^2 & r^T \\ r & R \end{bmatrix} \ ,$$

wobei jeder Wert von

$$\sigma_w^2 \in [0, \sigma_{w\ max}^2]$$

eine entsprechende Schätzung der Koeffizienten von

$$\theta(\sigma_w^2) = -(R - \sigma_w^2 I_n)^{-1} r \ ,$$

bestimmt, wobei

$$\sigma_w^{2*} \ ,$$

die Varianz von w(t), zu

$$[0, \sigma_{w\ max}^2] \qquad\qquad \theta(\sigma_w^{2*}) = \theta^*$$

und

gehört, wobei der dritte Schritt in einer zweiten Phase die Schätzung von

$$\sigma_w^{2*}$$

innerhalb des zulässigen Intervalls und somit von $\theta^*$ umfasst, wobei die Definition einer Kostenfunktion

$$J(\sigma_w^2)$$

geliefert wird durch

$$J(\sigma_w^2) = \|R_y^h \bar{\theta}(\sigma_w^2)\|_2^2 = \bar{\theta}(\sigma_w^2)^T (R_y^h)^T R_y^h \bar{\theta}(\sigma_w^2), \quad \sigma_w^2 \in [0, \sigma_{w\ max}^2]$$

worin

$$\bar{\theta}(\sigma_w^2) = [1\ \theta^T(\sigma_w^2)]^T \ ,$$

$$R_y^h = E[\varphi_y^h(t) \varphi_y^T(t)] \ ,$$

$$\varphi_y^h(t) = [y(t-n-1)\ y(t-n-2)...\ y(t-n-q)]^T \ ,$$

wobei q≥n ein Parameter ist, der gewählt wird, um das Verhältnis zwischen Genauigkeit und Rechenzeit zu optimieren, wobei der dritte Schritt zur Berechnung der Kostenfunktion eine dritte Phase der Einführung eines Satzes von q Yule-Walker-Gleichungen vom Typ

$$R^h_y \, \overline{\theta}^* = 0 \quad ,$$

umfasst,
wobei der dritte Schritt in einer vierten Phase die Schätzung von

$$\sigma^{2*}_w$$

umfasst, gewonnen durch Minimierung von

$$J\left(\sigma^2_w\right)$$

auf

$$\left[0, \hat{\sigma}^2_{wmax}\right]$$

mit

$$\hat{\sigma}^2_{wmax} = min \; eig\left(\hat{R}_y\right) \quad ,$$

und

$$\hat{R}_y = \frac{1}{N-n} \sum_{t=n+1}^{t=N} \varphi_y(t)\varphi^T_y(t) \quad ,$$

$$\hat{R}^h_y = \frac{1}{N-n-q} \sum_{t=n+q+1}^{t=N} \varphi^h_y(t)\varphi^{hT}_y(t) \quad ,$$

wobei die beschreibenden Modi der Resonanzfrequenzen des Komplexes definiert sind durch die Nullen des Polynoms q(z$^{-1}$), wobei die Parameter des Polynoms q(z$^{-1}$) die Komponenten von θ* sind.

3. Das System gemäß einem oder mehreren der obigen Ansprüche, **dadurch gekennzeichnet, dass** das globale Rechenmodul mit Anweisungen zur Durchführung einer globalen Prozedur zur Erfassung und Analyse, in Echtzeit, der synchronen Daten versehen ist, die von den digitalen Sensoren (2) gesendet und lokal von den lokalen Modulen verarbeitet werden, zur daraus folgenden Identifikation des dynamischen Mehrvariablen-Modells des Komplexes, wobei das dynamische Mehrvariablen-Modell ein EIV-Modell vom "AR+Noise"-Typ ist, mit minimaler Parametrierung, die mit einer Richtung im Lärmraum verknüpft ist, und die Bedingungen des Komplexes an den vordefinierten Installationspunkten der digitalen Sensoren (2) und in den Bereichen des Komplexes beschreibt, die zwischen den vordefinierten Punkten angeordnet sind, wobei das EIV-Modell vom "AR+Noise"-Typ mit minimaler Parametrierung durch folgende Gleichungen definiert wird:

$$x(t) = Q_1 x(t-1) + ... + Q_\mu x(t-\mu) + v(t) \quad ,$$

$$y(t) = x(t) + w(t) \quad ,$$

worin

$$w(t) = [w_1(t) w_2(t) ... w_m(t)]^T$$

ein Vektor von Elementen $w_1(t)$ ist, wobei (i=1,...m) aus weißen Prozessen, nicht korreliert mit den Komponenten von v(t), besteht, mit einem Erwartungswert von Null und mit Varianzen

$$\sigma^2_{wi} \quad ,$$

wobei

$$y(t) = [y_1(t) y_2(t) ... y_m(t)]^T$$

der Vektor der m Beobachtungen ist.

4. Das System gemäß Anspruch 3, **dadurch gekennzeichnet, dass** die globale Prozedur in einem ersten Durchgang, zum Schätzen, bei Sequenzen ohne Nutzsignale die Kovarianz-Matrix

$$\sum_{oe}$$

der Beobachtungsfehler bereitstellt, wobei die globale Prozedur in einem zweiten Durchgang die Betrachtung der Kovarianz-Matrix

$$\sum^*$$

umfasst, die definiert ist durch

$$\sum^* = \lim_{N \to \infty} \left( \frac{H^{*T} H^*}{N} \right)$$

worin

$$H^* = [H(x_1) H(x_2) ... H(x_m)]$$

wobei $H(x_i)$ eine Hankel-Matrix vom Typ

$$H(x_i) = \begin{bmatrix} x_i(1) & x_i(2) & ... & x_i(\mu) \\ x_i(2) & x_i(3) & ... & x_i(\mu+1) \\ \vdots & \vdots & .... & \vdots \\ x_i(N) & x_i(N+1) & ... & x_i(L-1) \end{bmatrix} ,$$

ist, die globale Prozedur in einem dritten Durchgang eine Schätzung der Parameter des Prozesses auf der Grundlage der Kovarianz-Matrix

$$\sum$$

der Daten, wobei additives Störrauschen herausgefiltert wurde, ermöglicht, um

$$\sum^{*}$$

zu erhalten.

**5.** Das System gemäß Anspruch 4, **dadurch gekennzeichnet, dass** der dritte Durchgang die Betrachtung der Kovarianz-Matrix der Daten

$$\sum$$

umfasst, wobei folgende Reaktion gilt:

$$\sum = \lim_{N \to \infty} \left( \frac{H^T H}{N} \right) = \sum{}^{*} + \sum{}_{oe}$$

und erhalten wird unter der Berücksichtigung, dass

y(t)=x(t)+w(t)  und  v(t)  und  w(t)  und  folglich  auch  x(t)  und  w(t)

und v(t) und w(t) und folglich auch x(t) und w(t) nicht miteinander korrelieren, wobei

$$H = [H(y_1) H(y_2) ... H(y_m)] \;,$$

und wobei

$$\sum{}_{oe}$$

die Kovarianz-Matrix der Beobachtungsfehler ist, gemessen während der Sequenzen, denen Nutzsignale fehlen, zur anschließenden Reduzierung des Problems der Identifikation eines "AR+Noise"-Modells auf das Problem der Identifikation eines AR-Modells, in dem dritten Durchgang, wobei

$$N \sum$$

durch $H^T H$ ersetzt wird.

**6.** Das System gemäß Anspruch 5, **dadurch gekennzeichnet, dass** der dritte Durchgang die Anwendung der Gleichung

$$\sum = \sum{}^{*} + \sum{}_{oe}$$

auf die verfügbaren Probenmengen mit Hilfe der Gleichung

$$H^{*T} H^{*} = H^T H - N \sum{}_{oe}$$

umfasst, worin, dank der Hypothese der fehlenden Korrelation zwischen v(t) und w(t), asymptotisch

$$H^T y_i^{\circ} = H^{*T} x_i^{*\circ}$$

worin

$$y_i^\circ = [\, y_i(\mu+1), y_i(\mu+2)\dots, y_i(L)]^T \;,$$

$$x_i^{*\circ} = [\, x_i(\mu+1), x_i(\mu+2)\dots, x_i(L)]^T \;,$$

wobei der dritte Durchgang, wenn die Gleichung

$$H^T H - N \sum_{oe}$$

zu positiven undefinierten Matrizen und/oder zu instabilen Modellen führt, die Durchführung einer nicht polarisierten Schätzung mit minimaler Varianz der Parameter des dynamischen Mehrvariablen-Modells mit Hilfe der Formel

$$\hat{\theta}_i = \left( H^T H - kN \sum_{oe} \right)^{-1} H^T y_i^o \qquad (i=1,\dots,m)$$

umfasst, wobei k so gewählt ist, dass es sowohl der Stabilitätsanforderung als auch der Bedingung

$$H^T H - kN \sum_{oe} > 0 \;,$$

entspricht,
wobei 0 < k < 1 und

$$\sum_{oe}$$

abgeleitet werden kann durch Berechnung der Proben-Kovarianz-Matrix von Sequenzen, denen Nutzinformation fehlt, was überprüft werden kann mit Hilfe eines Weißgehalt-Tests der Komponenten von y(t).

7. Das System gemäß einem oder mehreren der obigen Ansprüche, **dadurch gekennzeichnet, dass** es mindestens einen Analogsensor (5) umfasst, vorzugsweise gewählt aus einem Dehnmessstreifen, einer Messdose, einer Bewegungsmessvorrichtung, einer Geschwindigkeitsmessvorrichtung, einer Linearbeschleunigungsmessvorrichtung, einer Winkelbeschleunigungsmessvorrichtung, einem Kreiselkompass und dergleichen, wobei der mindestens eine Analogsensor (5) mit einer Vorrichtung zur Erfassung und lokalen Verarbeitung analoger Messungen verbunden ist, um die von dem mindestens einen Analogsensor (5) erfassten Informationen zu filtern und über den Bus (3) an die Steuerungs- und Verwaltungseinheit (4) zu senden.

8. Das System gemäß einem oder mehreren der obigen Ansprüche, **dadurch gekennzeichnet, dass** die Steuerungs- und Verwaltungseinheit (4) mit Netzverbindungsmitteln ausgestattet ist, zur Fernanalyse der Daten, der Informationen und der Modelle, und zum Herunterladen der Daten und für ihren fakultativen Transfer an entfernte Datenbanken.

**Revendications**

1. Système de surveillance structurale de complexes tels que des immeubles, des ponts, des viaducs, des installations, des infrastructures, des usines et des machines, comprenant une pluralité de capteurs numériques (2) pour des mesures accélérométriques, qui peuvent être agencés au niveau de points prédéfinis respectifs du complexe et peuvent être connectés, par l'intermédiaire d'un bus numérique (3), à une unité de commande et de gestion (4), qui est associée à un module de calcul global pour l'identification, sur la base des signaux envoyés par ledit au moins un capteur numérique (2) sur ledit bus numérique (3) et transportant des données relatives aux mesures, d'un modèle dynamique multivarié qui est descriptif de l'état et des conditions structurales du complexe, lesdits capteurs numériques (2) étant choisis du type des accéléromètres MEMS multiaxiaux, **caractérisé en ce que** chacun desdits capteurs numériques (2) est associé à un module de calcul et d'émission local respectif, pour le filtrage des mesures acquises et/ou pour l'identification, sur la base des mesures, d'un modèle dynamique local qui est descriptif de l'état et des conditions du complexe au niveau du point d'installation respectif et/ou pour la gestion et l'envoi desdites données à ladite unité (4) par l'intermédiaire dudit bus (3), chacun desdits modules locaux ayant des instructions pour exécuter une première procédure locale pour le filtrage des mesures acquises au moyen de techniques de filtrage du type filtre de Kalman, même étendues à des contextes stochastiques du type EIV (erreurs dans les variables), chacun desdits modules locaux étant pourvu d'instructions pour exécuter une deuxième procédure locale pour l'identification d'un modèle dynamique local EIV (erreurs dans les variables) du type « AR + bruit », les équations qui représentent ledit modèle dynamique local étant du type

$$q(z^{-1})x(t) = v(t)$$

$$y(t) = x(t) + w(t)\,,$$

y(t) désignant le signal en sortie du processus observé, v(t) et w(t) représentant des processus blancs d'espérance nulle qui ne sont pas mutuellement corrélés et ont des variances respectives $\sigma_v^2$ et $\sigma_w^2$, $q(z^{-1})$ étant un polynôme, en l'opérateur retard unité $z^{-1}$, qui est descriptif des caractéristiques autorégressives du processus et du type

$$q(z^{-1}) = 1 + \alpha_1 z^{-1} + ... + \alpha_n z^{-n}\,,$$

n étant l'ordre dudit modèle dynamique local considéré.

2.  Système selon la revendication 1, **caractérisé en ce que** chacun desdits modules locaux a des instructions pour exécuter une troisième procédure locale pour la détermination dudit polynôme $q(z^{-1})$ et desdites variances $\sigma_v^2$, $\sigma_w^2$, ladite troisième procédure locale comprenant une première étape de représentation dudit modèle dynamique local EIV (erreurs dans les variables) du type « AR + bruit » au moyen des formules

$$\left(\overline{\varphi}_x^T(t) - \overline{\varphi}_e^T(t)\right)\overline{\theta}^* = 0\,,$$

$$\overline{\varphi}_y(t) = \overline{\varphi}_x(t) + \overline{\varphi}_w(t)\,,$$

obtenues par considération des vecteurs $\overline{\varphi_x}(t)$, $\overline{\varphi_y}(t)$, $\overline{\varphi_w}(t)$, $\overline{\varphi_e}(t)$ définis par les expressions

$$\overline{\varphi}_x(t) = \begin{bmatrix} x(t) & x(t-1) & \cdots & x(t-n) \end{bmatrix}^T\,,$$

$$\overline{\varphi}_y(t) = \begin{bmatrix} y(t) & y(t-1) & \cdots & y(t-n) \end{bmatrix}^T = \begin{bmatrix} y(t) & \varphi_y^T(t) \end{bmatrix},$$

$$\overline{\varphi}_w(t) = \begin{bmatrix} w(t) & w(t-1) & \cdots & w(t-n) \end{bmatrix}^T\,,$$

$$\overline{\varphi}_e(t) = \begin{bmatrix} e(t) & \underbrace{0...0}_{n} \end{bmatrix}^T\,,$$

et d'un vecteur de paramètres étendu $\overline{\theta}^*$ donné par

$$\overline{\theta}^* = \begin{bmatrix} 1 & \alpha_1 & \cdots & \alpha_n \end{bmatrix}^T = \begin{bmatrix} 1 & \theta^{*T} \end{bmatrix}^T,$$

où θ* indique le vecteur des paramètres réels du processus,
ladite troisième procédure locale consistant, dans une deuxième étape, à considérer les matrices de covariance

$$R_{xe} = E\left[\left(\overline{\varphi}_x(t) - \overline{\varphi}_e(t)\right)\left(\overline{\varphi}_x(t) - \overline{\varphi}_e(t)\right)^T\right],$$

$$R_y = E\left[\overline{\varphi}_y(t)\overline{\varphi}_y^T(t)\right],$$

ladite deuxième étape conduisant aux relations

$$R_{xe}\overline{\theta}^* = 0,$$

$$R_y = R_{xe} + \tilde{R}^*,$$

où

$$\tilde{R}^* = diag\left[\sigma_e^{2*} + \sigma_w^{2*}, \sigma_w^{2*}I_n\right],$$

$R_y$ étant obtenue en tant qu'estimateur d'échantillonnage à partir des observations y(1), y(2), ..., y(L), L étant le nombre d'observations disponibles, ladite troisième procédure locale comprenant une troisième étape d'estimation des variances $\sigma_v^{2*}$, $\sigma_w^{2*}$ et des coefficients d'autorégression, ladite troisième étape consistant, dans une première phase, à considérer la famille de toutes les matrices diagonales semi-définies positives $\tilde{R}$ du type

$$\tilde{R} = diag\left[\sigma_e^2 + \sigma_w^2, \sigma_w^2 I_n\right]$$

telles que

$$R_y - \tilde{R} \geq 0, \quad \min eig\left(R_y - \tilde{R}\right) = 0,$$

ladite famille étant définie par les paires $\sigma_v^2$, $\sigma_w^2$ telles que

$$\sigma_w^2 \in \left[0, \sigma_{w\max}^2\right] \text{ et } \sigma_e^2 = \sigma_y^2 - \sigma_w^2 + r^T\theta\left(\sigma_w^2\right),$$

où

$$\sigma_{w\max}^2 = \min eig\left(R_y\right) \text{ et } \theta\left(\sigma_w^2\right) = -\left(R - \sigma_w^2 I_n\right)^{-1} r,$$

le scalaire $\sigma_y^2$, le vecteur r et la matrice R étant définis par la partition suivante de $R_y$

$$R_y = \begin{bmatrix} \sigma_y^2 & r^T \\ r & R \end{bmatrix},$$

chaque valeur de $\sigma_w^2 \in \left[0, \sigma_{w\max}^2\right]$ déterminant une valeur estimée respective des coefficients de

$\theta\left(\sigma_w^2\right) = -\left(R - \sigma_w^2 I_n\right)^{-1} r$, où $\sigma_w^{2*}$, variance de w(t), appartient à [0, $\sigma_w^2{}_{max}$] et $\theta\left(\sigma_w^{2*}\right) = \theta^*$, ladite troi-

sième étape consistant, dans une deuxième phase, pour l'estimation de $\sigma_w^{2*}$ dans l'intervalle admissible et en conséquence de $\theta^*$, à définir une fonction coût $J(\sigma_w{}^2)$ donnée par

$$J\left(\sigma_w^2\right) = \left\|R_y^h \overline{\theta}\left(\sigma_w^2\right)\right\|_2^2 = \overline{\theta}\left(\sigma_w^2\right)^T \left(R_y^h\right)^T R_y^h \overline{\theta}\left(\sigma_w^2\right), \qquad \sigma_w^2 \in \left[0, \sigma_{w\max}^2\right]$$

où

$$\overline{\theta}\left(\sigma_w^2\right) = \begin{bmatrix} 1 & \theta^T\left(\sigma_w^2\right) \end{bmatrix}^T,$$

$$R_y^h = E\left[\varphi_y^h(t)\varphi_y^T(t)\right],$$

$$\varphi_y^h(t) = \begin{bmatrix} y(t-n-1) & y(t-n-2) & \cdots & y(t-n-q) \end{bmatrix}^T,$$

$q \geq n$ étant un paramètre choisi de manière à optimiser le rapport entre précision et temps de calcul, ladite troisième étape comprenant, pour le calcul de ladite fonction coût, une troisième phase d'introduction d'un ensemble de q équations de Yule-Walker du type

$$R_y^h \overline{\theta}^* = 0,$$

ladite troisième étape consistant, dans une quatrième phase, à estimer $\sigma_w^{2*}$, obtenue par minimisation de $J(\sigma_w{}^2)$ sur $\left[0, \hat{\sigma}_{w\max}^2\right]$ avec

$$\hat{\sigma}_{w\max}^2 = \min eig\left(\hat{R}_y\right),$$

et

$$\hat{R}_y = \frac{1}{N-n} \sum_{t=n+1}^{t=N} \varphi_y(t)\varphi_y^T(t),$$

$$\hat{R}_y^h = \frac{1}{N-n-q} \sum_{t=n+q+1}^{t=N} \varphi_y^h(t)\varphi_y^{hT}(t),$$

les modes descriptifs des fréquences de résonance du complexe étant définis par les zéros dudit polynôme $q(z^{-1})$, les paramètres dudit polynôme $q(z^{-1})$ étant les composantes de $\theta^*$.

3. Système selon une ou plusieurs des revendications précédentes, **caractérisé en ce que** ledit module de calcul global est pourvu d'instructions pour exécuter une procédure globale pour l'acquisition et l'analyse en temps réel des données synchrones envoyées par lesdits capteurs numériques (2) et traitées localement par lesdits modules locaux, pour l'identification consécutive dudit modèle dynamique multivarié du complexe, ledit modèle dynamique multivarié étant un modèle EIV du type « AR + bruit » à paramétrage minimal associé à une direction dans l'espace bruit, et étant descriptif des conditions du complexe au niveau des points prédéfinis d'installation desdits capteurs numériques (2) et dans les régions du complexe qui sont intermédiaires entre les points prédéfinis, ledit modèle EIV du type « AR + bruit » à paramétrage minimal étant défini par les équations suivantes

$$x(t) = Q_1 x(t-1) + \ldots + Q_\mu x(t-\mu) + v(t) \,,$$

$$y(t) = x(t) + w(t) \,,$$

où $w(t)=[w_1(t) \; w_2(t) \cdots w_m(t)]^T$ est un vecteur d'éléments $w_i(t)$ (i = 1, ..., m) constitués par des processus blancs, non corrélés aux composantes de v(t), d'espérance nulle et de variances $\sigma_{wi}^2$, $y(t)=[y_1(t) \; y_2(t) \cdots y_m(t)]^T$ étant le vecteur des m observations.

4. Système selon la revendication 3, **caractérisé en ce que** ladite procédure globale consiste, dans un premier passage, à estimer, sur des séquences ne contenant pas de signaux utiles, la matrice de covariance $\Sigma_{oe}$ des erreurs d'observation, ladite procédure globale consistant, dans un deuxième passage, à considérer la matrice de covariance $\Sigma^*$, qui est définie par

$$\Sigma^* = \lim_{N \to \infty} \left( \frac{H^{*T} H^*}{N} \right),$$

où

$$H^* = \begin{bmatrix} H(x_1) & H(x_2) & \cdots & H(x_m) \end{bmatrix},$$

$H(x_i)$ étant une matrice de Hankel du type

$$H(x_i) = \begin{bmatrix} x_i(1) & x_i(2) & \cdots & x_i(\mu) \\ x_i(2) & x_i(3) & \cdots & x_i(\mu+1) \\ \vdots & \vdots & \ddots & \vdots \\ x_i(N) & x_i(N+1) & \ldots & x_i(L-1) \end{bmatrix}$$

ladite procédure globale permettant, dans un troisième passage, une estimation des paramètres du processus sur la base de la matrice de covariance E desdites données, filtrée relativement au bruit additif, afin d'obtenir $\Sigma^*$.

5. Système selon la revendication 4, **caractérisé en ce que** ledit troisième passage consiste à considérer la matrice de covariance E desdites données, la relation suivante étant valide

$$\Sigma = \lim_{N \to \infty} \left( \frac{H^T H}{N} \right) = \Sigma^* + \Sigma_{oe}$$

et étant obtenue par considération du fait que y(t) = x(t) + w(t) et que v(t) et w(t), et de façon similaire en conséquence x(t) et w(t), sont mutuellement non corrélés, et où

$$H = \begin{bmatrix} H(y_1) & H(y_2) & \cdots & H(y_m) \end{bmatrix},$$

et où $\Sigma_{oe}$ est la matrice de covariance des erreurs d'observation, mesurée durant lesdites séquences ne contenant pas de signaux utiles, pour la réduction subséquente du problème d'identification d'un modèle « AR + bruit » au problème d'identification d'un modèle AR, dans ledit troisième passage, en substituant $N\Sigma$ à $H^T H$.

**6.** Système selon la revendication 5, **caractérisé en ce que** ledit troisième passage consiste à appliquer la relation

$$\Sigma = \Sigma^* + \Sigma_{oe}$$

aux grandeurs d'échantillonnage disponibles, au moyen de la relation

$$H^{*T}H^* = H^T H - N\Sigma_{oe}$$

où, grâce à l'hypothèse d'absence de corrélation entre v(t) et w(t), asymptotiquement

$$H^T y_i^{\circ} = H^{*T} x_i^{*\circ}$$

où

$$y_i^{\circ} = \left[ y_i(\mu+1), y_i(\mu+2),..., y_i(L) \right]^T ,$$

$$x_i^{*\circ} = \left[ x_i(\mu+1), x_i(\mu+2),..., x_i(L) \right]^T ,$$

si la relation $H^T H$ - $N\Sigma_{oe}$ conduit à des matrices indéfinies positives et/ou à des modèles instables, ledit troisième passage consistant à effectuer une estimation sans biais et à variance minimale desdits paramètres dudit modèle dynamique multivarié au moyen de la formule

$$\hat{\theta}_i = \left( H^T H - kN\Sigma_{oe} \right)^{-1} H^T y_i^{\circ} \qquad (i = 1, ..., m),$$

k étant choisi de manière à se conformer aussi bien à la contrainte de stabilité qu'à la condition

$$H^T H - kN\Sigma_{oe} > 0$$

avec 0 < k < 1, $\Sigma_{oe}$ étant déductible par calcul de la matrice de covariance d'échantillonnage de séquences ne contenant pas d'informations utiles, ce qui peut être vérifié au moyen d'un test de blancheur sur les composantes de y(t).

**7.** Système selon une ou plusieurs des revendications précédentes, **caractérisé en ce qu'**il comprend au moins un capteur analogique (5), de préférence choisi parmi un extensomètre, une cellule dynamométrique, un dispositif de mesure de déplacement, un dispositif de mesure de vitesse, un dispositif de mesure d'accélération linéaire, un dispositif de mesure d'accélération angulaire, un gyroscope et analogues, ledit au moins un capteur analogique (5) étant connecté à un dispositif pour l'acquisition et le traitement local de mesures analogiques, afin de filtrer les informations collectées par ledit au moins un capteur analogique (5) et de les envoyer à ladite unité de commande et de gestion (4) par l'intermédiaire dudit bus (3).

**8.** Système selon une ou plusieurs des revendications précédentes, **caractérisé en ce que** ladite unité de commande et de gestion (4) est pourvue de moyens de connexion réseau, pour l'analyse à distance desdites données, desdites informations et desdits modèles et pour le téléchargement desdites données et leur transfert optionnel vers des bases de données à distance.

_Fig. 1_

_Fig. 2_

EP 2 738 536 B1

Fig.3

EP 2 738 536 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7861593 B2